# EUROPÄISCHE PATENTSCHRIFT

(11) **EP 1 324 812 B1**
(45) Veröffentlichungstag und Bekanntmachung des Hinweises auf die Patenterteilung: **24.03.2004**
(21) Anmeldenummer: 01980162.0
(22) Anmeldetag: 11.09.2001
(51) Int. Cl.: B01D 25/00

(54) **SEDIMENTATIONSFILTERANLAGE**
SEDIMENTATION FILTRATION INSTALLATION
INSTALLATION DE FILTRAGE A SEDIMENTATION

(30) Priorität: 11.09.2000 DE 10044817
(43) Veröffentlichungstag der Anmeldung: 09.07.2003
(73) Patentinhaber: Hoffmann, Klaus, 57250 Netphen (DE)
(72) Erfinder: Hoffmann, Klaus, 57250 Netphen (DE)
(74) Vertreter: Füssel, Michael
(86) Internationale Anmeldenummer: PCT/DE2001/003486
(87) Internationale Veröffentlichungsnummer: WO 2002/020121

(56) Entgegenhaltungen:
- EP-A- 0 198 334
- EP-A- 0 677 315
- FR-A- 2 124 494
- GB-A- 925 993
- US-A- 2 254 176
- US-A- 2 973 866
- US-A- 3 194 399
- US-A- 4 238 333
- US-A- 4 351 733
- US-A- 4 701 260
- US-A- 4 957 628
- US-A- 5 378 378
- US-A- 5 536 409
- US-A- 5 605 636

## Beschreibung

Die Erfindung betrifft eine kontinuierlich arbeitende Sedimentationsfilteranlage zur Reinigung verschmutzter Prozessflüssigkeit wie Kühlmittel, Hydroformingwasser, Bohr-, Walz-, Schleif- und Drehemulsionen, Waschwässern und dergleichen, bestehend aus einem Sedimentationsbehälter mit einer Vielzahl von plattenartigen, im Abstand zueinander geneigt angeordneten, parallel verlaufenden, einen Filterkörper bildenden Filterlamellen, einer Austragseinrichtung für das abgesetzte Sediment, einer im Sedimentationsbehälter mündenden Zuführung zur Einleitung verschmutzter Prozessflüssigkeit und einem mit einem Überlauf des Sedimentationsbehälters verbundenen Reintank zur Aufnahme der gereinigten Prozessflüssigkeit.

Sedimentationsfilteranlagen werden zur Reinigung von Prozessflüssigkeiten eingesetzt, die während eines Produktions- oder Bearbeitungsprozesses durch Partikel verunreinigt werden, deren spezifisches Gewicht höher als das der eigentlichen Prozessflüssigkeit ist. In einem Behälter setzen sich diese Partikel aufgrund der auf sie einwirkenden Schwerkraft ab und bilden ein sogenanntes Sediment, das aus dem Absetzbehälter mittels geeigneter Vorrichtungen entfernt werden muß.

Um die Absinkgeschwindigkeit der Partikel und damit die Durchsatzleistung einer derartigen Anlage zu erhöhen, werden beim Stand der Technik im Inneren des Sedimentationsbehälters geneigt stehende plattenartige Filterlamellen angeordnet, die durch Abstandshalter zueinander beabstandet sind.

Durch die beschriebene Anordnung der Filterlamellen wird der Absetzweg für die einzelnen Partikel drastisch verringert und beträgt bei bekannten Anlagen etwa 5 bis 15mm.

Durch die Verkürzung des Absetzweges behindern sich die zu entfernenden Schmutzpartikel beim Absetzen praktisch nicht mehr gegenseitig, so daß die Reinigungswirkung und Kapazität derartiger Anlagen gegenüber einfachen Absetzbehältern erhöht sind.

Das auf den Filterlamellen abgesetzte Sediment wird durch unterhalb des Filterkörpers liegende Blasrohre entfernt, wobei bei größeren Anlagen die Filterlamellen zum Abblasen des Sediments durch geeignete Stelleinrichtungen in eine vertikale Lage gebracht werden können.

Der verdickte Partikelkuchen sinkt dann von den Filterlamellen auf den Boden des Absetzbehälters, von wo er mit Kratzbändern oder ähnlichen Austragseinrichtungen entfernt wird.

Die zu reinigende Prozessflüssigkeit wird bei den bekannten Anlagen mittels einer Rohrzuleitung neben dem Filterkörper eingespeist, so daß die Prozessflüssigkeit hauptsächlich seitlich in den Filterkörper strömt.

Um zu verhindern, daß mit der Prozessflüssigkeit Luftblasen in den Sedimentationsbehälter gelangen, die den Absetzvorgang stören würden, weisen die Zuleitungen ausreichend dimensionierte Entlüftungsleitungen auf. Da beim Reinigen der Filterlamellen mittels Pressluft ein niedrigerer Flüssigkeitsstand von Vorteil ist, kann dieser über Pumpen eingestellt werden.

Die gereinigte Prozessflüssigkeit tritt durch einen Überlauf im Sedimentationsbehälter in einen Reintank über, von wo aus die erneut dem entsprechenden Bearbeitungs- oder Produktionsprozeß zugeführt werden kann.

Neben der Reinigung der Prozessflüssigkeit von Schmutzpartikeln mit höherem spezifischen Gewicht tritt insbesondere in der Metallverarbeitung häufig eine Verschmutzung der Prozessflüssigkeit mit sogenanntem Fremdöl auf, das ein geringeres spezifisches Gewicht als die Prozessflüssigkeit hat und in Folge dessen auf der Oberfläche der Flüssigkeit im Sedimentationsbehälter aufschwimmt. Dort kann es über entsprechende Wehre und Austragseinrichtungen abgeschöpft werden, wobei der Überlauf vom Sedimentationsbehälter zum Reintank knapp unterhalb des oberen Flüssigkeitsspiegels angeordnet ist.

Bei den bekannten Sedimentationsfilteranlagen der oben beschriebenen Bau- bzw. Funktionsart wird die zu reinigende Prozessflüssigkeit über eine seitlich neben bwz. vor dem Filterkörper mündende Rohrleitung mit vergleichsweise geringem Strömungsquerschnitt zugeführt. Der unterhalb des Filterkörpers ausgebildete Freiraum ist bei bestehenden Anlagen relativ niedrig, da man eine geringe Bauhöhe der Gesamtanlage anstrebte.

Die beschriebenen Filteranlagen weisen jedoch eine geringe Durchsatzleistung auf und sind bei erhöhter Schmutzbeladung der Prozessflüssigkeit störanfällig.

Der Erfindung liegt daher die Aufgabe zu Grunde, eine zuverlässig arbeitende Sedimentationsfilteranlage mit erhöhter Durchsatzleistung zu schaffen.

Diese Aufgabe wird erfindungsgemäß dadurch gelöst, daß zur Zuführung der Prozessflüssigkeit in den Sedimentationsbehälter mindestens zwei an gegenüberliegenden Seiten des Behälters neben bzw. vor den Filterlamellen mündende Anschlußstutzen vorgesehen sind, daß zwischen der Unterseite des Filterkörpers und dem Boden des Sedimentationsbehälters ein mit Flüssigkeit gefüllter Absetzraum vorgesehen ist, dessen vertikale Höhe mindestens ein Fünftel der vertikalen Höhe des Filterkörpers beträgt, und daß zwischen dem Filterkörper und den Anschlußstutzen eine Strömungsleitplatte vorgesehen ist, welche die zugeführte Prozessflüssigkeit zwangsweise in den Absetzraum leitet.

Durch diese erfindungsgemäßen Maßnahmen wird bereits die Strömungsgeschwindigkeit des in den Absetzbehälter einströmenden Mediums bei gleichen Rohrleitungsdurchmessern mindestens halbiert, wobei dieser Effekt durch vergrößerte Rohrquerschnitte noch erhöht werden kann. Gleichzeitig ist die Strömungsrichtung vor dem Absetzraum gegenläufig, so daß lediglich lokal begrenzte Strömungswirbel auftreten, welche die Absetzgeschwindigkeit der Schmutzpartikel nur unwesentlich verringern. Darüber hinaus wird durch diese Maßnahme verhindert, daß bereits abgesetztes Sediment wieder in den Bereich des Filterkörpers aufgewirbelt wird. Das zwischen dem Filterkörper und den Anschlußstutzen vorgesehene Strömungsleitblech trennt die einströmende Prozessflüssigkeit zunächst vom Filterkörper und führt sie in den Absetzraum unterhalb der Filterlamellen, von wo aus der Filterköper von unten nach oben durchströmt wird. Durch die Herabsetzung der Strömungsgeschwindigkeit haben sich größere Schmutzpartikel bereits vorher abgesetzt. Auch die Vergrößerung der Höhe des Absetzraumes trägt zu einer Beruhigung der turbulenten Strömung bei, so daß weniger Sediment aufgewirbelt wird.

Die seitlich neben bzw. vor dem Filterlörper mündenden Anschlußstutzen können zur weiteren Herabsetzung der Einströmgeschwindigkeit kastenartig aufgeweitet sein, wobei die Anschlußstutzen vorzugweise geneigt in den Absetzraum geführt sind, um eine Vorsedimentation in den Anschlußstutzen zu vermeiden. Durch die geneigte Lage der Anschlußstutzen rutscht etwa sich absetzendes Sediment in den Absetzbehälter und kann dort mit Hilfe des erwähnten Kratzbandes entfernt werden. Insbesondere bei einer hohen Schmutzbelastung der Prozessflüssigkeit ist diese Maßnahme wesentlich.

Wie bereits erwähnt, ist es zur Reinigung der Filterlamellen empfehlenswert, diese beim Einblasen der Pressluft mit Hilfe der unterhalb des Filterkörpers angeordneten Blasrohre senkrecht zu stellen, um ein Ablösen des Sediments zu erleichtern. Dazu wird vorzugsweise eine pneumatische Antriebs- bzw. Verschwenkeinrichtung verwendet, die die einzelnen Filterlamellen aus der geneigt angeordneten Arbeitsstellung in die senkrechte Stellung verschwenkt. Die Filterlamellen bestehen beispielsweise aus Stahlplatten, die in einer sägezahnartigen Aufnahme sitzen und mittels der erwähnten Antriebseinrichtung, die am oberen Ende der Filterlamellen angreift, verschwenkt werden können.

Die Aufnahme für die Filterlamellen ist vorzugsweise etwa mittig beiderseits des Filterkörpers angeordnet. Dadurch werden die Lamellen beim Senkrechtstellen um einen mittleren Drehpunkt verschwenkt, so daß die erforderlichen Verstellkräfte minimiert sind.

Um nicht die einzelnen Filterlamellen mit der Antriebseinrichtung zum Verschwenken verbinden zu müssen, können vor, hinter und zwischen den Lamellen Mitnehmerplatten vorgesehen sein, die gegen die Lamellen bzw. deren Abstandshalter anliegen und mit ihren oberen Enden gelenkig mit der Verschwenkeinrichtung verbunden sind. Durch ein synchrones Verschwenken dieser Mitnehmerplatten um ihren Drehpunkt werden gleichzeitig die Lamellen gekippt.

Um den Reinigungsvorgang mit Hilfe der einzublasenden Pressluft zu beschleunigen, ist bei einer weiteren Ausgestaltung der Erfindung vorgesehen, mehrere Blasrohre unterhalb des Filterkörpers anzuordnen und diese über Einzelventile anzusteuern. Der Blasdruck beträgt etwa drei bis sechs bar.

Damit ein Zusetzen der Blasrohre vermieden wird, bzw. um durch die Ausströmöffnungen eingedrungenes Sediment entfernen zu können, sind die Blasrohre vorzugsweise an beiden Enden mit Druckluft beaufschlagbar. Hierdurch wird auch die Reinigungswirkung auf die Filterlamellen verbessert.

Um das auf den Filterlamellen abgesetzte Sediment effektiv entfernen zu können, kann weiterhin ein Unwuchtrüttler vorgesehen sein, der an den Filterlamellen bzw. den Mitnehmerplatten angreift.

Die Austragseinrichtung zur Entfernung des abgesetzten Sedimentes vom Boden des Absetzraumes ist vorzugsweise als sogenanntes Kratzband ausgebildet. Dieses Kratzband besteht aus mehreren parallel zueinander angeordneten Austragsstegen, die von zwei Kettenführungen getragen und über den Boden des Absetzraumes gezogen werden.

Um ein Verhaken zu vermeiden bzw. den Verschleiß der Austragsstege bzw. des Behälterbodens zu minimieren, können quer zu den Austragsstegen verlaufende Abstandsführungen vorgesehen sein, zwischen denen sich eine dauerhafte, ebenfalls den Verschleiß minimierende Sedimentschicht absetzt.

Das Kratzband wird im Absetzbehälter vorzugsweise mit Hilfe von zylindrischen Rollen geführt und umgelenkt, wobei die Rollen Nuten aufweisen, in die die Antriebsketten formschlüssig eingreifen. Der Antrieb der Ketten erfolgt synchron über entsprechende Ritzel, wobei die Umlenkung des Kratzbandes von seinem horizontalen Laufbereich im Behälterboden in die schräg nach oben verlaufende Austragsrichtung mit Hilfe von zwei Rollen oder Ritzeln erfolgt, die zueinander höhenversetzt angeordnet sind. Auf diese Weise wird der Umlenkwinkel vergrößert, was einen erheblichen Vorteil bezüglich der Laufruhe der Kette hat und den Verschleiß des Kratzbandes insgesamt verringert.

Um das von den schräg nach oben verlaufenden Austragsstegen mitgeführte Sediment sicher entfernen zu können, sind am oberen Umlenkpunkt des Kratzbandes vorzugsweise spezielle Abstreifeinrichtungen vorgesehen, die z.B. aus pendelnd aufgehängten Abstreifern bestehen, die sich selbsttätig auf die Austragsstege legen und relativ zu den Austragsstegen beim Weiterlauf der Kette bewegen, so daß das dort abgesetzte bzw. geförderte Sediment abgestreift wird und in einen unterhalb des Kratzbandes aufgestellten Sammelbehälter fallen kann.

Zum Entfernen von aufschwimmenden Fremdflüssigkeiten von der Oberfläche der im Sedimentationbehälter befindlichen Prozessflüssigkeit kann z.B. eine Saugpumpe, ein Skimmer oder ein Ölaustragsband mit rippenförmigen im Abstand zueinander angeordneten Abstreifern vorgesehen sein. Damit ein möglichst vollständiges Abstreifen des aufgeschwommenen Fremdöls erfolgen kann, können zu beiden Seiten des Ölaustragsbandes stegartige Ölsperren vorgesehen sein, die in Richtung zum Überlaufwehr für das Fremdöl ansteigen. Dadurch wird ein seitliches Abschwimmen des Öles verhindert und eine nahezu vollständige Entfernung erreicht.

Um ein kontinuierliches Abschöpfen oder Absaugen des Fremdöls zu gewährleisten, ist es weiterhin zweckmäßig, den Flüssigkeitsstand im Sedimentationsbehälter auf einen konstanten Wert zu regeln. Dazu sind beispielsweise Ultraschallsensoren vorgesehen, die den jeweiligen Flüssigkeitsstand berührungslos erfassen und über ansteuerbare Regeleinrichtungen wie Überlaufklappen, Pumpen oder dergleichen auf den eingestellten Wert regeln. Bei entsprechender Höhe des Überlaufes zum Reintank dicht unterhalb des eingestellten Flüssigkeitsspiegels ist durch die Flüssigkeitstandsregelung auch gewährleistet, daß praktisch kein Fremdöl in den Reintank abschwimmt.

Es sei erwähnt, daß die Filteranlage zur Aufrechterhaltung der physikalisch-chemischen Einflußgrößen, insbesondere der Betriebstemperatur der Prozessflüssigkeit, über zusäztliche Aggregate wie Kühler, Heizungen, Dosierpumpen und dergleichen verfügen kann, die gegebenenfalls in einem zusätzlichen Tank vorgesehen sind.

Des weiteren hat es sich als zweckmäßig erwiesen, die Abstandshalter für die Filterlamellen als parallel zueinander verlaufende Abstandsleisten auszubilden, so daß eine bevorzugte Sedimentation in Längsrichtung der Filterlamellen vermieden wird.

Durch einen zwischen dem Sedimentationsbehälter und dem Reintank angeordneten Zusatztank kann die Reinigung des Filterkörpers vereinfacht werden. Der Zusatztank verfügt über einen z.B. V-förmig verlaufenden Gefälleboden und eine oder mehrere Pumpen, die den sich an der tiefsten Stelle absetzenden Schlamm abpumpen und z.B. zum Einlaufbereich des Sedimentationsbehälters fördern können. Der Zusatztank kann vertikal angeordnete Strömungsleitbleche aufweisen, die ihn in mehrere Kammern unterteilen. Sie dienen der Aufnahme von Prozessflüssigkeit aus dem Sedimentationsbehälter, wenn dessen Flüssigkeitsniveau zum Reinigen der Filterlamellen abgesenkt werden soll.

Die Erfindung wird im nachfolgenden anhand der Zeichnung beispielsweise beschrieben.

Es zeigen:
- Fig.1: einen schematischen Längsschnitt durch eine erfindungsgemäße Sedimentationsfilteranlage,
- Fig.2: einen Querschnitt durch die Filteranlage gemäß Fig.1 im Bereich des Sedimentationsbehälters in einer ersten Ausführung,
- Fig.3: einen Querschnitt durch die Filteranlage gemäß Fig.1 im Bereich des Sedimentationsbehälters in einer zweiten Ausführung,
- Fig.4: eine seitliche Schnittansicht des Filterkörpers, der Mitnehmerplatten und der Verschwenkeinrichtung,
- Fig.5: eine schematische Draufsicht auf die Sedimentationsfilteranlage,
- Fig.6: eine Ansicht des Kratzbandes mit den Kettenführungen,
- Fig.7: eine Seitenansicht des oberen Antriebsritzels für das Kratzband mit den pendelnd aufgehängten Abstreifern,
- Fig.8: eine seitliche Schnittansicht der ansteuerbaren Niveauregelklappe und
- Fig.9: eine Draufsicht und einen Schnitt durch eine Filterlamelle mit parallel verlaufenden Abstandshaltern.

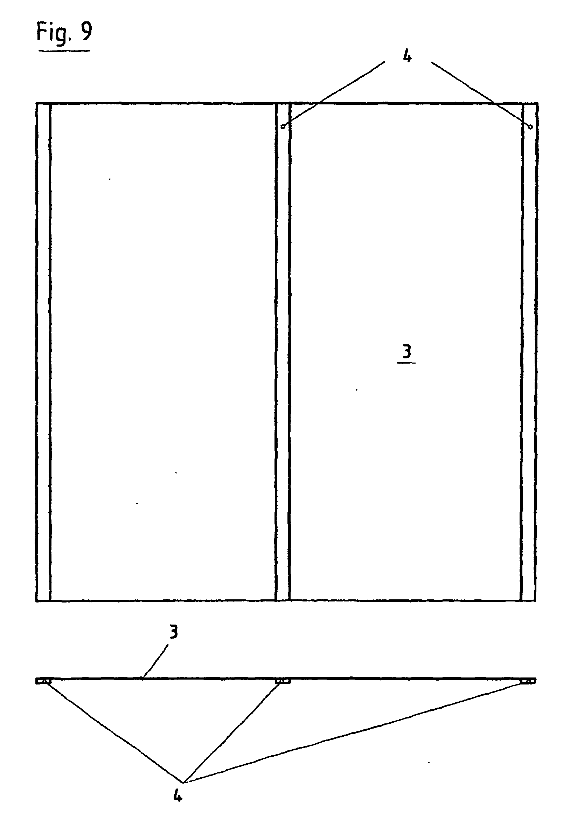

Die schematisch in der Zeichnungsfigur 1 dargestellte Sedimentationsfilteranlage besteht im wesentlichen aus einem Sedimentationsbehälter 1 mit einem Filterkörper 2, der aus einer Vielzahl von parallel zueinander verlaufenden, im Abstand angeordneten Filterlamellen 3 gebildet wird. Der Abstand der einzelnen Filterlamellen 3 zueinander wird über parallel zueinander verlaufende Abstandsleisten 4 festgelegt, die auf die Filterlamellen 3 aufgeschweißt sind (vgl. Fig.9).

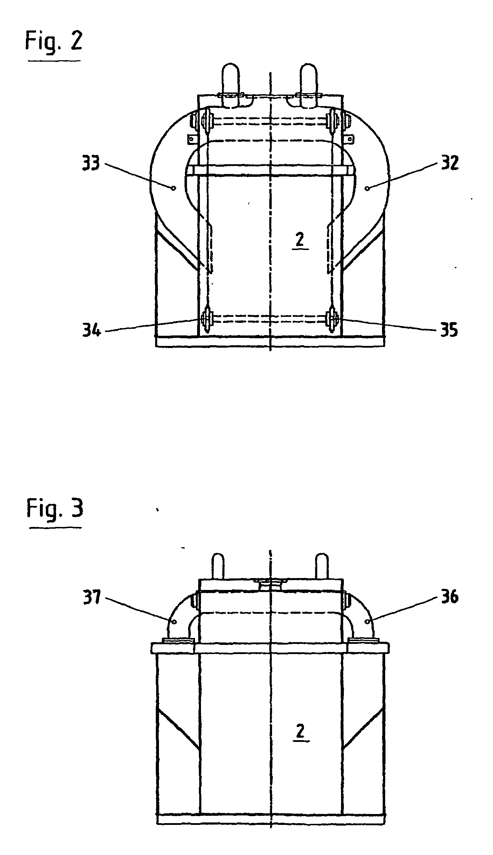

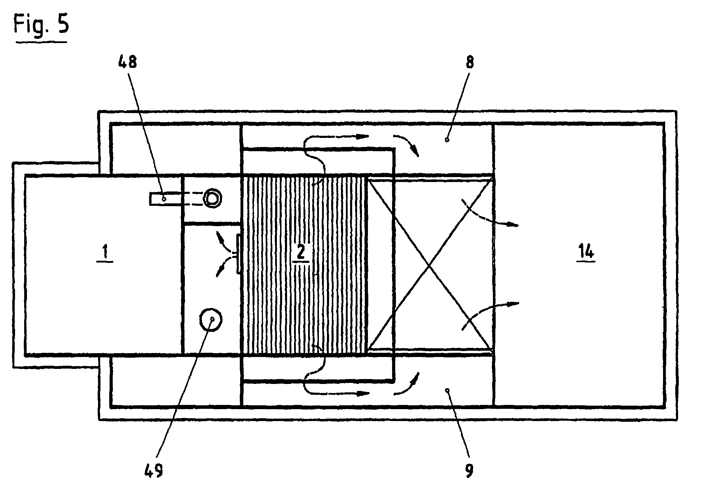

Über eine beidseitig vor bzw. neben dem Filterkörper 2 im Sedimentationsbehälter 1 mündende Zuleitung 5 (vgl. Fig.2 und 3) wird die zu reinigende Prozessflüssigkeit in den Sedimentationsbehälter 1 eingeleitet, wobei der Filterkörper 2 durch ein abgewinkeltes Trennblech 6, das an die seitlichen Wände des Sedimentationsbehälters 1 angeschweißt ist, von der einlaufenden Prozessflüssigkeit derart getrennt ist, daß diese zunächst in den Absetzraum 7 strömt, der unterhalb des Filterkörpers 2 ausgebildet ist. Von dort aus steigt die verschmutzte Prozessflüssigkeit durch den Filterkörper 2 nach oben und läuft über seitliche Strömungskanäle 8,9 (vgl. Fig.5) über das Wehr 10 zunächst in einen zwischen geschalteten Kühlertank 11 mit einem Kühlaggregat 12 und von dort über das Wehr 13 in den Reintank 14, von wo aus es mit Hilfe der Versorgungspumpen 15 erneut dem Prozesskreislauf zur Verfügung gestellt wird.

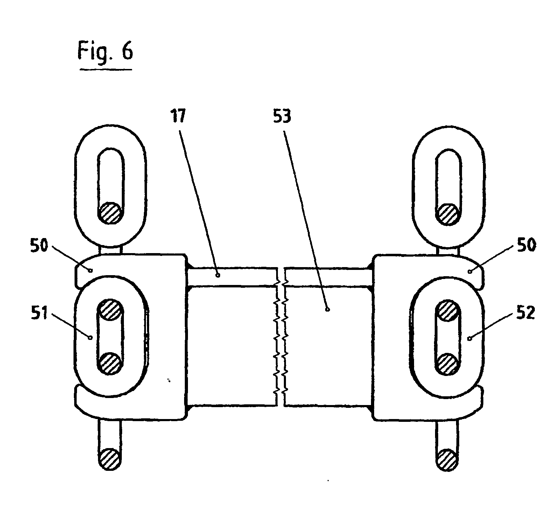

Im Absetzraum 7 unterhalb des Filterkörpers 2 läuft ein Kratzband 16, dessen Austragsstege 17 (vgl. Fig.6) über den Boden 18 des Sedimentationsbehälters 1 in Längsrichtung der Filteranlage gezogen werden, das dort abgesetzte Sediment mitnehmen und aus dem Sedimentationsbehälter 1 nach oben austragen. Das Kratzband 16 wird endseitig über Ritzel 19,20 angetrieben bzw. umgelenkt und über Profilrollen 21,22 geführt, die zueinander höhenversetzt angeordnet sind, so daß der Umlenkwinkel zwischen dem horizontalen Laufbereich und dem schräg nach oben weisenden Förderbereich flacher wird. Die Rolle 23 dient als Spannelement.

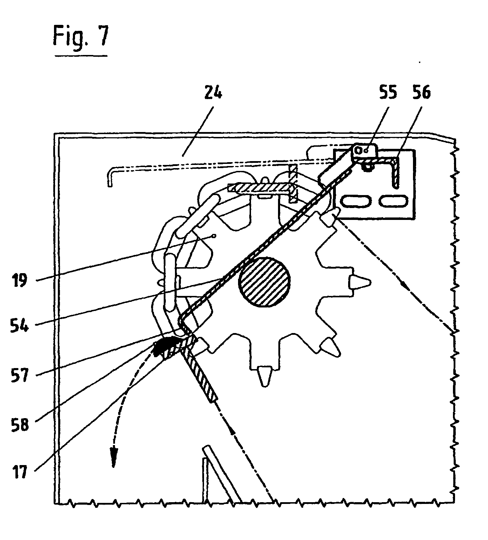

Im Bereich des Ritzels 19 befindet sich eine Abstreifeinrichtung 24, durch die ausgetragenes Sediment von den Austragsstegen 17 des Kratzbandes 16 selbsttätig entfernt wird und die weiter unten im Einzelnen im Zusammenhang mit Fig.7 erläutert wird.

Die Zuleitungen 5 verfügen über ausreichend dimensionierte Entlüftungsrohre 25, durch die mitgerissene Luftblasen, die innerhalb des Sedimentationsbehälters 1 zur Schaumbildung und zu einer Störung des Sedimentationsvorganges führen könnten, effektiv entfernt werden.

Im oberen Bereich des Sedimentationsbehälters 1 sind zwei seitliche Ölsperren 26 vorgesehen, durch die aufschwimmendes Fremdöl in eine Ölkammer 27 gedrückt wird (vgl. Fig.5).

Das in der Ölkammer 27 angesammelte Fremdöl kann über die Ölabsaugpumpe 28 entfernt werden.

Eine Schmutzpumpe 29 fördert unterhalb des Fremdöls Prozessflüssigkeit und Sediment zurück in den Sedimentationsbehälter 1. Eine weitere Pumpe 30 dient als Zirkulationspumpe und sorgt für einen beständigen Umlauf der Flüssigkeit im Sedimentationsbehälter 1 bei einem Stillstand der Anlage.

Mittels einer Dosierpumpe 31 im Absetzraum 7 kann beispielsweise Öl nachdosiert werden, wenn Emulsionen gereinigt werden, bei denen ein vorgeschriebenes Öl-/Wasserverhältnis einzuhalten ist.

Bei der in Fig.2 gezeigten Schnittdarstellung ist zu erkennen, daß die Zuleitung 5 beidseitig vor bzw. neben dem Filterkörper 2 im Sedimentationsbehälter 1 mündet, wobei die Zuleitungsrohre 32,33 geneigt in den Sedimentationsbehälter 1 einmünden und einen vergleichsweise großen Querschnitt haben.

Der unterhalb des Filterkörpers 2 ausgebildete Absetzraum 7 weist eine Höhe auf, die größer als ein Fünftel der vertikalen Filterhöhe ist und in dem das an Ketten 34,35 geführte Kratzband 16 läuft.

Bei der in Fig.3 gezeigten Ausführungsform sind die Zuleitungsrohre 36,37 kastenartig aufgeweitet, so daß der Eintrittsquerschnitt der Prozessflüssigkeit in den Sedimentationsbehälter 1 gegenüber der Ausführung gemäß Fig.2 nochmals vergrößert ist.

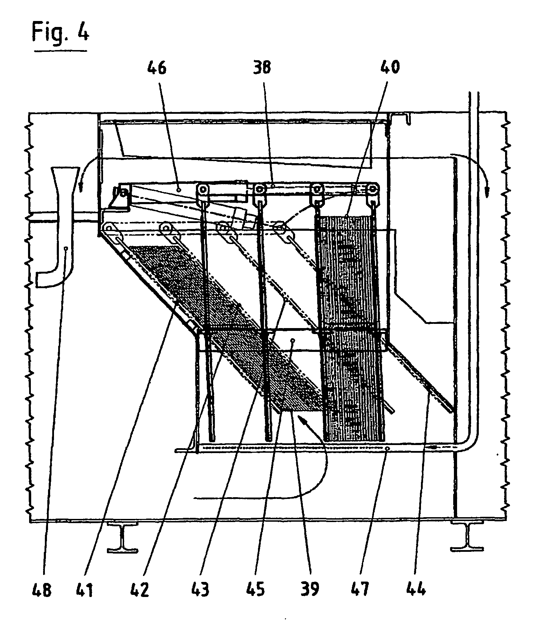

Unter Bezugnahme auf die Schnittdarstellung gemäß Fig.4 wird ein Verstellgestänge 38 erläutert, das zum Verschwenken der Filterlamellen 3 dient. Die Filterlamellen 3 sind dabei zu einzelnen Lamellenpaketen 39,40 zusammengefaßt, zwischen denen Mitnehmerplatten 41,42,43,44 angeordnet sind. Die Mitnehmerplatten und die Lamellenpakete sind dabei in einer etwa mittigen Aufnahme 45 verschwenkbar gelagert, wobei die Mitnehmerplatten an ihren oberen Enden gelenkig mit dem Verstellgestänge 38 verbunden sind. Durch ein Ausfahren eines Verstellzylinders 46 können die einzelnen Mitnehmerplatten aus der geneigten Betriebsstellung in eine senkrechte Reinigungsstellung verschwenkt werden, die durch das Lamellenpaket 40 verdeutlicht wird.

In dieser Stellung kann über die Pressluftleitung 47 Pressluft zwischen die Filterlamellen 3 eingeblasen werden, so daß abgesetztes Sediment abgelöst wird und nach unten in den Absetzraum 7 fällt. Zur Unterstützung des Reinigungsvorganges kann am Gestänge 38 ein nicht dargestellter Rüttler angreifen.

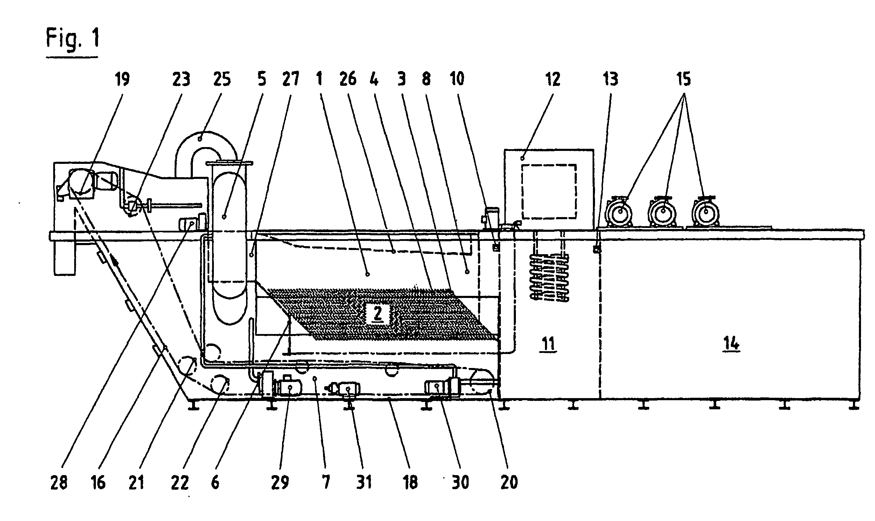

Bei der Draufsicht gemäß Fig.5 ist die Lage der Ölkammer 27 zu erkennen. Eine Überlaufleitung 48, die unterhalb des Flüssigkeitsniveaus mündet, führt Prozessflüssigkeit zurück in den Sedimentationsbehälter 1, während eine Öltasse 49 zum Absaugen des ausgetragenen Fremdöles mit Hilfe der Ölabsaugpumpe 28 dient (vgl. Fig.1).

In Fig.5 sind ebenfalls die seitlichen Strömungskanäle 8,9 zu erkennen, durch die die gereinigte Prozessflüssigkeit seitlich in Richtung zum Reintank 14 strömt.

Bei der Darstellung gemäß Fig.6 sind die einzelnen Bauteile des Kratzbandes 16 zu erkennen. Das Kratzband besteht aus T-förmigen Austragsstegen 17, die seitlich an Mitnehmerklauen 50 befestigt sind, die ihrerseits an gegenüber liegenden Kettengliedern 51,52 befestigt sind. Das Kratzband 16 läuft in Längsrichtung der Filteranlage gemäß Fig.1 nach links über die Profilrollen 21,22 wobei die Querschenkel 53 der Austragsstege 17 das abgesetzte Sediment vor sich herschieben bzw. schräg nach oben zur Abstreifeinrichtung 24 fördern.

Eine solche Abstreifeinrichtung 24 ist in Fig.7 dargestellt. Sie besteht im wesentlichen aus einer am vorderen Ende abgebogenen Platte 54, die zwischen den Ritzeln 19,20 angeordnet ist und mittels eines Gelenkes 55 verschwenkbar an einer Halterung 56 befestigt ist. In einer unteren Stellung legt sich das abgebogene Ende 57 der Platte 54 auf die Oberfläche des Querschenkels 53 und streift augrund der Relativbewegung beim Weiterlaufen des Kratzbandes 16 dort abgelagertes Sediment 58 nach links ab, so daß es in einen unterhalb der Abstreifeinrichtung 24 angeordneten Container fallen kann.

Beim Weiterlauf des Kratzbandes 16 nimmt die Platte 54 dann eine etwa waagerechte, obere Stellung ein, aus der es wiederum nach unten fällt, wenn es außer Eingriff mit dem oben liegenden Querschenkel 53 gerät, so daß sich der Abstreifvorgang wiederholen kann.

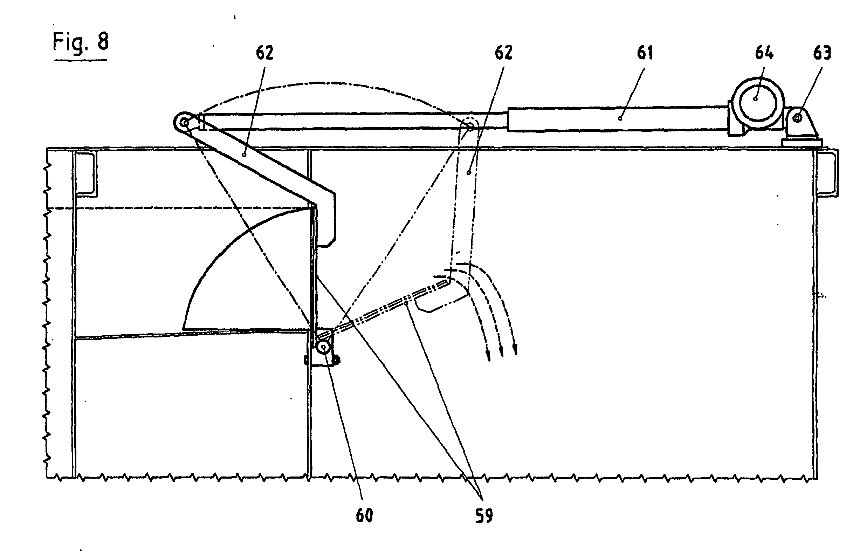

In Fig.8 ist eine verstellbare Klappe 59 dargestellt, mit deren Hilfe das Flüssigkeitsniveau im Sedimentationsbehälter 1 eingestellt werden kann. Die Klappe 59 ist verschwenkbar an einem Gelenk 60 gelagert und kann mit Hilfe des Verstellzylinders 61 und der an die Klappe 59 angeschweißten Winkelkralle 62 kreisförmig verschwenkt werden, wobei die Winkelkralle 62 gelenkig mit dem Verstellzylinder 61 verbunden ist. Der Verstellzylinder 61 selber ist verschwenkbar mit dem Gelenk 63 verbunden und kann mit Hilfe des Elektromotors 64 verstellt werden, so daß sich je nach Stellung der Klappe 59 das gewünschte Flüssigkeitsniveau im Sedimentationsbehälter ergibt.

Die Ausbildung der einzelnen Filterlamellen 3 mit den Abstandsleisten 4 ist in der Draufsicht bzw. den Schnitt gemäß Fig.9 zu erkennen. Im Gegensatz zu den früher üblichen Ausbauchungen in den Filterlamellen 3, die versetzt zueinander angeordnet waren, ergibt sich bei den parallel verlaufenden Abstandsleisten 4 keine bevorzugte Sedimentationsfahne mehr, so daß zwischen den einzelnen Reinigungsintervallen längere Betriebszeiten der Filteranlagen möglich sind.

### Bezugszeichenliste

- 1): Sedimentationsbehälter
- 2): Filterkörper
- 3): Filterlamellen
- 4): Abstandsleisten
- 5): Zuleitung
- 6): Trennblech
- 7): Absetzraum
- 8): Strömungskanal
- 9): Strömungskanal
- 10): Wehr
- 11): Kühlertank
- 12): Kühlaggregat
- 13): Wehr
- 14): Reintank
- 15): Versorgungspumpen
- 16): Kratzband
- 17): Austragssteg
- 18): Boden
- 19): Ritzel
- 20): Ritzel
- 21): Profilrolle
- 22): Profilrolle
- 23): Spannelement, Rolle
- 24): Abstreifeinrichtung
- 25): Entlüftungsrohr
- 26): Ölsperre
- 27): Ölkammer
- 28): Ölabsaugpumpe
- 29): Schmutzpumpe
- 30): Zirkulationspumpe
- 31): Dosierpumpe
- 32): Zuleitungsrohr
- 33): Zuleitungsrohr
- 34): Kette
- 35): Kette
- 36): Zuleitungsrohr
- 37): Zuleitungsrohr
- 38): Verstellgestänge
- 39): Lamellenpaket
- 40): Lamellenpaket
- 41): Mitnehmerplatte
- 42): Mitnehmerplatte
- 43): Mitnehmerplatte
- 44): Mitnehmerplatte
- 45): Aufnahme
- 46): Verstellzylinder
- 47): Pressluftleitung
- 48): Überlaufleitung
- 49): Öltasse
- 50): Mitnehmerklaue
- 51): Kettenglied
- 52): Kettenglied
- 53): Querschenkel
- 54): Platte
- 55): Gelenk
- 56): Halterung
- 57): abgebogenes Ende
- 58): Sediment
- 59): verstellbare Klappe
- 60): Gelenk
- 61): Verstellzylinder
- 62): Winkelkralle
- 63): Gelenk
- 64): Elektromotor

## Patentansprüche

1. Kontinuierlich arbeitende Sedimentationsfilteranlage zur Reinigung verschmutzter Prozessflüssigkeit wie Kühlmittel, Hydroformingwasser, Bohr-, Walz-, Schleif- und Drehemulsionen, Waschwässern und dergleichen, bestehend aus einem Sedimentationsbehälter mit einer Vielzahl von plattenartigen, im Abstand zueinander geneigt angeordneten, parallel verlaufenden, einen Filterkörper bildenden Filterlamellen, einer Austragseinrichtung für das abgesetzte Sediment, einer im Sedimentationsbehälter mündenden Zuführung zur Einleitung verschmutzter Prozeßflüssigkeit und einem mit einem Überlauf des Sedimentationsbehälters verbundenen Reintank zur Aufnahme der gereinigten Prozeßflüssigkeit, wobei zur Zuführung der Prozeßflüssigkeit in den Sedimentationsbehälter (1) mindestens zwei an gegenüberliegenden Seiten des Behälters neben bzw. vor den Filterlamellen (3) mündende Anschlußstutzen vorgesehen sind, zwischen der Unterseite des Filterkörpers (2) und dem Boden des Sedimentationsbehälters (1) ein mit Flüssigkeit gefüllter Absetzraum (7) vorgesehen ist, dessen vertikale Höhe mindestens 1/5 der vertikalen Höhe des Filterkörpers (2) beträgt, **dadurch gekennzeichnet, daß** zwischen dem Filterkörper (2) und den Anschlußstutzen ein abgewinkeltes Trennblech (6) vorgesehen ist, welches die zugeführte Prozeßflüssigkeit vom Filterkörper (2) trennt und zwangsweise unterhalb des Filterkörpers (2) in den Absetzraum (7) leitet, von wo aus der Filterkörper von unten nach oben durchströmt wird und daß die Austragseinrichtung für das abgesetzte Sediment als Kratzband (16) ausgebildet ist, das aus einer horizontalen Laufrichtung über den Boden (18) des Sedimentationsbehälters (1) in eine geneigt nach oben verlaufende Austragsrichtung über mindestens zwei zueinander höhenversetzte Rollen (21, 22) oder Ritzel geführt ist.

2. Sedimentationsfilteranlage nach Anspruch 1, **dadurch gekennzeichnet, daß** die Zuführung zur Einleitung verschmutzter Prozeßflüssigkeit entlüftet ist.

3. Sedimentationsfilteranlage nach Anspruch 1, **dadurch gekennzeichnet, daß** die Anschlußstutzen zur Einleitung der Prozeßflüssigkeit in den Sedimentationsbehälter (1) kastenartig aufgeweitet sind.

4. Sedimentationsfilteranlage nach einem der Ansprüche 1 bis 3, **dadurch gekennzeichnet, daß** die Filterlamellen (3) bzw. der Filterkörper (2) mittels einer vorzugsweise pneumatischen Antriebseinrichtung aus der geneigt angeordneten Arbeitsstellung in eine sich etwa senkrecht zur Horizontalen erstreckende Reinigungsstellung verschwenkbar sind.

5. Sedimentationsfilteranlage nach einem der Ansprüche 1 bis 4, **dadurch gekennzeichnet, daß** im Sedimentationsbehälter (1) zur Reinigung der Filterlamellen (3) bzw. des Filterkörpers (2) unterhalb des Filterkörpers (2) mit Druckluft beaufschlagbare Blasrohre vorgesehen sind.

6. Sedimentationsfilteranlage nach Anspruch 5, **dadurch gekennzeichnet, daß** die Blasrohre einzeln über Druckluftventile mit Druckluft ansteuerbar sind.

7. Sedimentationsfilteranlage nach Anspruch 5 oder 6, **dadurch gekennzeichnet, daß** die Blasrohre an beiden Enden Druckluftanschlüsse ausweisen.

8. Sedimentationsfilteranlage nach einem der Ansprüche 1 bis 7, **dadurch gekennzeichnet, daß** zur Reinigung der Filterlamellen (3) bzw. des Filterkörpers (2) ein Umwuchtrüttler vorgesehen ist.

9. Sedimentationsfilteranlage nach einem der Ansprüche 1 bis 8, **dadurch gekennzeichnet, daß** daß das Kratzband aus an Ketten geführten parallel im Abstand zueinander angeordneten, über den Boden (18) des Sedimentationsbehälters (1) laufenden Austragsstegen (17) besteht.

10. Sedimentationsfilteranlage nach einem der Ansprüche 1 bis 9, **dadurch gekennzeichnet, daß** im Bodenbereich des Sedimentationsbehälters (1) mindestens zwei sich quer zur Bewegungsrichtung der Austragsstege (17) erstreckende, gegen die Unterseite der Austragsstege (17) anliegende Abstandsführungen vorgesehen sind.

11. Sedimentationsfilteranlage nach einem der Ansprüche 1 bis 10, **dadurch gekennzeichnet, daß** zum Antrieb, zur Umlenkung oder zum Spannen der Ketten des Kratzbandes (16) Ritzel oder zylindrische Rollen mit Nuten vorgesehen sind, in die die Kettenglieder (51), (52) der Ketten formschlüssig eingreifen.

12. Sedimentationsfilteranlage nach einem der Ansprüche 1 bis 11, **dadurch gekennzeichnet, daß** die Filterlamellen (3) als Distanzstücke parallel zueinander verlaufende Abstandsleisten (4) aufweisen.

13. Sedimentationsfilteranlage nach einem der Ansprüche 1 bis 12, **dadurch gekennzeichnet, daß** zum Austragen von auf der Prozeßflüssigkeit aufschwimmendem Fremdöl ein oberhalb des Flüssigkeitsniveaus laufendes Ölaustragsband mit rippenförmigen, in Abstand zueinander angeordneten Abstreifern, ein Skimmer oder eine. Ölabsaugpumpe vorgesehen ist.

14. Sedimentationsfilteranlage nach einem der Ansprüche 1 bis 13, **dadurch gekennzeichnet, daß** im Sedimentationsbehälter (1) oberhalb des Filterkörpers (2) zwei seitlich angeordnete, zumindest bereichsweise geneigt verlaufende, stegartige Ölsperren (26) vorgesehen sind.

15. Sedimentationsfilteranlage nach einem der Ansprüche 1 bis 14, **dadurch gekennzeichnet, daß** der Flüssigkeitsstand der Prozeßflüssigkeit im Sedimentationsbehälter (1) mittels einer Niveauregelung einstellbar ist.

16. Sedimentationsfilteranlage nach Anspruch 15, **dadurch gekennzeichnet, daß** der Flüssigkeitsstand der Prozeßflüssigkeit mittels Ultraschallsensoren erfaßt und über ansteuerbare Regeleinrichtungen wie Überlaufklappen und dergleichen regelbar ist.

17. Sedimentationsfilteranlage nach einem der Ansprüche 1 bis 16, **dadurch gekennzeichnet, daß** zum Entfernen des Sediments (58) von den Austragsstegen (17) des Kratzbandes (16) eine auf die Oberseite der Austragsstege (17) abrasiv wirkende sich relativ zum Kratzband (16) bzw. den Austragsstegen (17) bewegende, pendelnd aufgehängte Abstreifvorrichtung (24) vorgesehen ist.

## Claims

1. Continuously operating sedimentation filter system for cleaning contaminated process liquid such as coolant, hydroforming water, drilling, rolling, grinding and turning emulsions, washing waters and the like, consisting of a sedimentation vessel with a multiplicity of plate-like filter layers which are disposed in an inclined and mutually spaced manner, which extend in parallel and which form a filter body, of a discharge device for the settled sediment, of an inlet issuing in the sedimentation vessel for introduction of contaminated process liquid, and of a clean tank which is connected to an overflow of the sedimentation vessel and is intended to receive the cleaned process liquid, wherein in order to supply the process liquid into the sedimentation vessel (1) at least two connectors are provided which issue at opposite sides of the vessel next to or upstream of the filter layers (3), between the lower side of the filter body (2) and the base of the sedimentation vessel (1) a settling chamber (7) filled with liquid is provided, the vertical height of which is at least 1/5 of the vertical height of the filter body (2), **characterised in that** between the filter body (2) and the connectors an angle-bent separating plate (6) is provided which separates the supplied process liquid from the filter body (2) and forcibly channels it underneath the filter body (2) into the settling chamber (7) from where the flow passes through the filter body from the bottom to the top, and that the discharge device for the settled sediment is formed as a scraping conveyor (16) which is guided from a horizontal running direction over the base (18) of the sedimentation vessel (1) into a discharge direction extending in an upwardly inclined manner, via at least two pinions or rollers (21, 22) which are offset with respect to each other in terms of height.

2. Sedimentation filter system as claimed in claim 1, **characterised in that** the inlet for introduction of contaminated process liquid is vented.

3. Sedimentation filter system as claimed in claim 1, **characterised in that** the connectors for introduction of the process liquid into the sedimentation vessel (1) are widened in a box-like manner.

4. Sedimentation filter system as claimed in any one of claims 1 to 3, **characterised in that** the filter layers (3) or filter body (2) can be pivoted by means of a preferably pneumatic drive device from the inclined working position into a cleaning position extending approximately perpendicular to the horizontal.

5. Sedimentation filter system as claimed in any one of claims 1 to 4, **characterised in that** in order to clean the filter layers (3) or filter body (2) blow pipes which can be acted upon by compressed air are provided in the sedimentation vessel (1) beneath the filter body (2).

6. Sedimentation filter system as claimed in claim 5, **characterised in that** the blow-pipes can be activated individually with compressed air via compressed air valves.

7. Sedimentation filter system as claimed in claim 5 or 6, **characterised in that** the blow pipes have compressed air connections at both ends.

8. Sedimentation filter system as claimed in any one of claims 1 to 7, **characterised in that** in order to clean the filter layers (3) or the filter body (2) an unbalanced mass vibration generator is provided.

9. Sedimentation filter system as claimed in any one of claims 1 to 8, **characterised in that** the scraping conveyor consists of discharge fins (17) which run over the base (18) of the sedimentation vessel (1) and are disposed in a parallel, mutually spaced manner and carried on chains.

10. Sedimentation filter system as claimed in any one of claims 1 to 9, **characterised in that** in the base region of the sedimentation vessel (1) at least two spacing guides are provided which extend transverse to the direction of movement of the discharge fins (17) and lie against the lower side of the discharge fins (17).

11. Sedimentation filter system as claimed in any one of claims 1 to 10, **characterised in that** in order to drive, to divert or to tension the chains of the scraping conveyor (16) pinions or cylindrical rollers with grooves are provided, into which the chain links (51), (52) of the chains engage in a form-fit manner.

12. Sedimentation filter system as claimed in any one of claims 1 to 11, **characterised in that** the filter layers (3) have spacing strips (4) which extend in a mutually parallel manner as distance pieces.

13. Sedimentation filter system as claimed in any one of claims 1 to 12, **characterised in that** in order to discharge foreign oil floating on the process liquid an oil discharge conveyor, which runs above the level of the liquid and has rib-like, mutually spaced strippers, a skimmer or an oil suction pump are provided.

14. Sedimentation filter system as claimed in any one of claims 1 to 13, **characterised in that** two laterally disposed, web-like oil barriers (26), of which at least some regions extend in an inclined manner, are provided in the sedimentation vessel (1) above the filter body (2).

15. Sedimentation filter system as claimed in any one of claims 1 to 14, **characterised in that** the level of the process liquid in the sedimentation vessel (1) can be adjusted by means of a level regulating process.

16. Sedimentation filter system as claimed in claim 15, **characterised in that** the level of the process liquid is detected by ultrasound sensors and can be regulated by activatable regulating devices such as overflow valves and the like.

17. Sedimentation filter system as claimed in any one of claims 1 to 16, **characterised in that** in order to remove the sediment (58) from the discharge fins (17) of the scraping conveyor (16) a stripping device (24) is provided which is suspended in a swinging manner, which moves relative to the scraping conveyor (16) or the discharge fins (17) and which acts in a abrasive manner on the upper side of the discharge fins (17).

## Revendications

1. Installation de filtration par sédimentation fonctionnant en continu, pour purifier un liquide de traitement encrassé tel qu'un réfrigérant, de l'eau d'hydroformage, des émulsions de forage, de laminage, de polissage et de tournage, des eaux de lavage, etc., composée d'un récipient de sédimentation avec une multiplicité de lamelles filtrantes en forme de plaques qui sont espacées, inclinées et parallèles et qui forment un corps filtrant, un dispositif d'évacuation pour le sédiment déposé, un dispositif d'amenée qui débouche dans le récipient de sédimentation et qui est destiné à introduire le liquide de traitement sali, et un réservoir propre qui est relié à un trop-plein du récipient de sédimentation et qui est destiné à recueillir le liquide de traitement purifié, étant précisé que pour l'amenée du liquide de traitement dans le récipient de sédimentation (1), il est prévu au moins deux raccords qui débouchent sur des côtés opposés du récipient, près des lamelles filtrantes (3) ou devant celles-ci, et aussi, entre le côté inférieur du corps filtrant (2) et le fond du récipient de sédimentation (1), un espace de décantation (7) qui est rempli de liquide et dont la hauteur verticale est égale à au moins 1/5 de la hauteur verticale du corps filtrant (2), **caractérisée en ce qu'**il est prévu entre le corps filtrant (2) et les raccords une tôle de séparation coudée (6) qui sépare du corps filtrant (2) le liquide de traitement amené et l'amène obligatoirement au-dessous dudit corps filtrant (2), dans l'espace de décantation (7), d'où ledit liquide traverse le corps filtrant de bas en haut, et **en ce que** le dispositif d'évacuation pour le sédiment déposé est conçu comme une raclette (16) qui passe d'un sens de marche horizontal sur le fond (18) du récipient de sédimentation (1) à un sens d'évacuation incliné vers le haut, grâce à au moins deux poulies (21, 22) ou pignons décalés en hauteur.

2. Installation de filtration par sédimentation selon la revendication 1, **caractérisée en ce que** le dispositif d'amenée destiné à introduire le liquide de traitement sali est aéré.

3. Installation de filtration par sédimentation selon la revendication 1, **caractérisée en ce que** les raccords prévus pour introduire le liquide de traitement dans le récipient de sédimentation (1) sont élargis en forme de caissons.

4. Installation de filtration par sédimentation selon l'une des revendications 1 à 3, **caractérisée en ce que** les lamelles filtrantes (3) ou le corps filtrant (2) sont aptes à pivoter grâce à un dispositif d'entraînement de préférence pneumatique pour passer de la position de travail, inclinée, à une position de nettoyage à peu près perpendiculaire à l'horizontale.

5. Installation de filtration par sédimentation selon l'une des revendications 1 à 4, **caractérisée en ce qu'**il est prévu dans le récipient de sédimentation (1), pour nettoyer les lamelles filtrantes (3) ou le corps filtrant (2), des tuyaux d'injection aptes à être sollicités par de l'air comprimé, au-dessous dudit corps filtrant (2).

6. Installation de filtration par sédimentation selon la revendication 5, **caractérisée en ce que** les tuyaux d'injection sont aptes à être commandés individuellement avec de l'air comprimé par l'intermédiaire de soupapes à air comprimé.

7. Installation de filtration par sédimentation selon la revendication 5 ou 6, **caractérisée en ce que** les tuyaux d'injection présentent à leurs deux extrémités des raccordements d'air comprimé.

8. Installation de filtration par sédimentation selon l'une des revendications 1 à 7, **caractérisée en ce qu'**il est prévu pour nettoyer les lamelles filtrantes (3) ou le corps filtrant (2) un vibreur déséquilibré.

9. Installation de filtration par sédimentation selon l'une des revendications 1 à 8, **caractérisée en ce que** la raclette se compose de bandes d'évacuation (17) qui sont guidées sur des chaînes, qui sont parallèles et espacées et qui passent sur le fond (18) du récipient de sédimentation (1).

10. Installation de filtration par sédimentation selon l'une des revendications 1 à 9, **caractérisée en ce qu'**il est prévu dans la zone du fond du récipient de sédimentation (1) au moins deux guides d'espacement qui s'étendent transversalement par rapport au sens de déplacement des bandes d'évacuation (17) et qui sont appliqués contre le côté inférieur de celles-ci.

11. Installation de filtration par sédimentation selon l'une des revendications 1 à 10, **caractérisée en ce qu'**il est prévu pour entraîner, dévier ou tendre les chaînes de la raclette (16) des pignons ou des rouleaux cylindriques avec des rainures dans lesquelles les maillons (51), (52) des chaînes s'engrènent par complémentarité de forme.

12. Installation de filtration par sédimentation selon l'une des revendications 1 à 11, **caractérisée en ce que** les lamelles filtrantes (3) présentent, comme écarteurs, des barrettes d'écartement (4) parallèles.

13. Installation de filtration par sédimentation selon l'une des revendications 1 à 12, **caractérisée en ce qu'**il est prévu, pour évacuer l'huile extérieure qui flotte sur le liquide de traitement, une bande d'évacuation d'huile qui passe au-dessus du niveau de liquide et qui est pourvue de racloirs en forme de nervures et espacés les uns des autres, ou un absorbeur d'huile ou encore une pompe d'aspiration d'huile.

14. Installation de filtration par sédimentation selon l'une des revendications 1 à 13, **caractérisée en ce qu'**il est prévu dans le récipient de sédimentation (1), au-dessus du corps filtrant (2), deux barrages à huile en forme de nervures (26) qui sont disposés sur les côtés et qui sont inclinés au moins par zones.

15. Installation de filtration par sédimentation selon l'une des revendications 1 à 14, **caractérisée en ce que** le niveau du liquide de traitement dans le récipient de sédimentation (1) est réglable grâce à une régulation de niveau.

16. Installation de filtration par sédimentation selon la revendication 15, **caractérisée en ce que** le niveau du liquide de traitement est détecté à l'aide de capteurs à ultrasons et est réglable grâce à des dispositifs de réglage aptes à être commandés, comme des clapets de trop-plein et des éléments similaires.

17. Installation de filtration par sédimentation selon l'une des revendications 1 à 16, **caractérisée en ce que** pour éliminer le sédiment (58) des bandes d'évacuation (17) de la raclette (16), il est prévu un dispositif racleur (24) qui a une action abrasive sur le côté supérieur desdites bandes d'évacuation (17), qui se déplace par rapport à la raclette (16) et aux bandes d'évacuation (17) et qui est suspendu en vue d'un mouvement oscillant.
